(19) Europäisches Patentamt
European Patent Office
Office européen des brevets

(11) **EP 4 733 730 A1**

(12) **EUROPEAN PATENT APPLICATION**
published in accordance with Art. 153(4) EPC

(43) Date of publication:
**29.04.2026 Bulletin 2026/18**

(21) Application number: **24824898.1**

(22) Date of filing: **02.02.2024**

(51) International Patent Classification (IPC):
**G01L 25/00** (2006.01)   **B60W 20/10** (2016.01)
**B60W 10/06** (2006.01)

(52) Cooperative Patent Classification (CPC):
**Y02T 10/62**

(86) International application number:
**PCT/CN2024/075622**

(87) International publication number:
**WO 2024/259995 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 CN 202310740002**

(71) Applicant: **Chongqing Changan Automobile Co., Ltd.**
**Chongqing 400023 (CN)**

(72) Inventors:
• **YANG, Fangzi**
**Chongqing 400023 (CN)**
• **NIE, Xianghong**
**Chongqing 400023 (CN)**
• **WEN, Wenwu**
**Chongqing 400023 (CN)**
• **YANG, Zhengjun**
**Chongqing 400023 (CN)**

(74) Representative: **Barker Brettell LLP**
**100 Hagley Road**
**Edgbaston**
**Birmingham B16 8QQ (GB)**

(54) **METHOD AND APPARATUS FOR CALIBRATING ENGINE TORQUE, AND VEHICLE CONTROLLER**

(57)    Embodiments of the present application provide a method and an apparatus for calibrating an engine torque, and a vehicle controller, belonging to the field of vehicle control. The method includes: acquiring an engine target torque and a generator signal torque of a hybrid vehicle; calculating a torque deviation of the hybrid vehicle according to the engine target torque and the generator signal torque; performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent. According to embodiments of the present application, the problems that oil consumption performance is poor and driving performance in a low-temperature limit working condition is poor due to an engine real torque being relatively large are solved, and the problem that electric quantity during emission loop testing is unbalanced due to the engine real torque being relatively small is solved. By improving the torque precision, the oil consumption performance of the vehicle is improved, the low-temperature driving performance of the vehicle is enhanced, and the electric quantity is more easily balanced.

FIG. 2

# EP 4 733 730 A1

## Description

The present application claims priority of Chinese patent application No. 202310740002.3, filed with the China National Intellectual Property Administration on June 20, 2023 and entitled "METHOD AND APPARATUS FOR CALIBRATING ENGINE TORQUE, AND VEHICLE CONTROLLER", which is hereby incorporated by reference in its entirety.

## TECHNICAL FIELD

The present application relates to the field of vehicle control and, in particular, to a method and an apparatus for calibrating an engine torque, and a vehicle controller.

## BACKGROUND

In the related art, engine torque precision refers to the difference between a torque signal (abbreviated as signal torque) sent by an engine to a controller area network bus (CAN, Controller Area Network) and a real engine torque (abbreviated as real torque), which is expressed as a percentage, and its calculation formula is: (signal torque - real torque) / signal torque × 100%. The signal torque of the engine is obtained by calculation through a torque model. Because of manufacturing variation of the engine and an intake and exhaust system, it is found that the engine torque precision is usually within a range of ± 10% in a whole-vehicle application, by performing wheel-edge force testing on a chassis dynamometer.

With the development of hybrid vehicle technology, a whole-vehicle controller requires higher and higher engine torque precision, and the engine torque precision needs to be within a range of ± 3%. For hybrid vehicles with P13 configuration and REEV (Range-Extended) configuration, an engine is mechanically connected with a generator, and the torque of the generator is relatively accurate, with the torque precision within a range of ± 3%. Calibration methods in the related art cannot solve the problem of torque deviation caused by manufacturing variation or environmental change, and need manual calibration, which are not intelligent enough.

In view of the above problems in the related art, no efficient and accurate solutions have been found yet.

## SUMMARY

The present application provides a method and an apparatus for calibrating an engine torque and a vehicle controller, so as to solve the technical problems in the related art.

According to an embodiment of the present application, there is provided a method for calibrating an engine torque, which includes: acquiring an engine target torque and a generator signal torque of a hybrid vehicle; calculating a torque deviation of the hybrid vehicle according to the engine target torque and the generator signal torque; performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent.

Further, the calculating the torque deviation of the hybrid vehicle according to the engine target torque and the generator signal torque includes: subtracting a historical engine signal torque of an immediately preceding control cycle from the engine target torque to obtain an engine target torque deviation; subtracting the generator signal torque from the historical engine signal torque of the immediately preceding control cycle to obtain an engine real torque deviation; subtracting the generator signal torque from the engine target torque to obtain a calculated engine control torque deviation; where torque deviations include the engine target torque deviation, the engine real torque deviation and the engine control torque deviation.

Further, the performing the self-learning calculation based on the torque deviation to obtain the engine demand torque of the hybrid vehicle includes: locating a self-learning area according to a current engine parameter of the hybrid vehicle; deciding whether a self-learning torque value is allowed to be written into the self-learning area, based on the engine target torque deviation and the engine real torque deviation; if the self-learning torque value is allowed to be written into the self-learning area, performing self-learning torque calculation within the self-learning area based on the engine control torque deviation, and storing the self-learning torque value into a corresponding storage unit; reading the self-learning torque value from the storage unit, and adding the self-learning torque value to the engine target torque to obtain the engine demand torque.

Further, the locating the self-learning area according to the current engine parameter of the hybrid vehicle includes: setting parameter thresholds of a plurality of engine working condition parameters, where the parameter thresholds include X engine rotational speed thresholds, Y engine load thresholds and Z engine temperature thresholds, and X, Y and Z are all positive integers greater than 0; partitioning a quantity of engine storage units by using quantities of the parameter thresholds, where each storage unit is configured to store a self-learning value; acquiring current engine parameters of the hybrid vehicle; obtaining parameter indexes according to a comparison between the current engine parameters and corresponding parameter thresholds, where the parameter indexes include an engine rotational speed index, an engine load index and an engine temperature index, and a parameter index is used to represent a threshold interval where a current engine parameter is located; locating a storage unit serial number of a self-learning area by using the parameter indexes.

Further, the partitioning the quantity of the engine storage units by using the quantities of the parameter thresholds includes: partitioning an engine operating area into $(X+1) \times (Y+1)$ areas; partitioning the quantity of the engine storage units into $(X+1) \times (Y+1) \times Z$.

Further, the locating the storage unit serial number of the self-learning area by using the parameter indexes includes: calculating a storage unit serial number i by using the following formula: i = the engine rotational speed index $\times$ Z + the engine load index $\times$ (X + 1) $\times$ Z + the engine temperature index.

Further, the deciding whether the self-learning torque value is allowed to be written into the self-learning area, based on the engine target torque deviation and the engine real torque deviation, includes: determining stability flags of the hybrid vehicle, where the stability flags include an engine target torque stability flag, an engine rotational speed stability flag and a generator torque stability flag; deciding whether the stability flags are all in a set state, and deciding whether a real-time working condition of the hybrid vehicle meets all the following preset conditions: an engine water temperature is greater than a set value; an engine completes startup and lasts for a period of time; the engine is in a torque control mode; an absolute value of the engine target torque deviation is less than or equal to a first threshold, an absolute value of the engine real torque deviation is greater than or equal to a second threshold; the engine target torque is greater than or equal to a third threshold; if the stability flags are all in the set state and the real-time working condition of the hybrid vehicle meets all the preset conditions, determining that self-learning writing is allowed.

Further, the performing the self-learning torque calculation within the self-learning area based on the engine control torque deviation, and storing the self-learning torque value into the corresponding storage unit includes: deciding whether the engine control torque deviation is great than or equal to a deviation threshold, and comparing the self-learning torque value of the self-learning area with a threshold; if the engine control torque deviation is greater than or equal to a first deviation threshold and the self-learning torque value is less than an upper limit value, determining as a first self-learning state; if the engine control torque deviation is less than or equal to a second deviation threshold and the self-learning torque value is greater than a lower limit value, determining as a second self-learning state; if the engine control torque deviation is less than the first deviation threshold, or the engine control torque deviation is greater than the second deviation threshold, or the self-learning torque value is equal to the upper limit value or the lower limit value, determining as a third self-learning state; if it is the first self-learning state, increasing the self-learning torque value at a preset rate; if it is the second self-learning state, decreasing the self-learning torque value at a preset rate; if it is the third self-learning state, maintaining a current self-learning torque value of the self-learning area; updating in real time the corresponding self-learning torque value in the storage unit of the self-learning area.

Further, the calibrating the engine signal torque based on the engine demand torque includes: operating an engine of the hybrid vehicle according to the engine demand torque, detecting a real torque of the engine, and determining the real torque as a calculated engine torque; subtracting the self-learning torque value from the calculated engine torque to obtain the engine signal torque.

According to another embodiment of the present application, there is provided an apparatus for calibrating an engine torque, which includes: an acquiring module, configured to acquiring an engine target torque and a generator signal torque of a hybrid vehicle; a calculating module, configured to calculating a torque deviation of the hybrid vehicle according to the engine target torque and the generator signal torque; a calibrating module, configured to perform self-learning calculation based on the torque deviation to obtain an engine demand torque of the hybrid vehicle, and calibrate an engine signal torque based on the engine demand torque to make the engine signal torque, the generator signal torque and the engine target torque of the hybrid vehicle consistent.

Further, the calculating module includes: a first calculating unit, configured to subtract a historical engine signal torque of an immediately preceding control cycle from the engine target torque to obtain an engine target torque deviation; a second calculating unit, configured to subtract the generator signal torque from the historical engine signal torque of the immediately preceding control cycle to obtain an engine real torque deviation; a third calculate unit, configured to subtract the generator signal torque from the engine target torque to obtain a calculated engine control torque deviation; where torque deviations include the engine target torque deviation, the engine real torque deviation and the engine control torque deviation.

Further, the calibrating module includes: a locating unit, configured to locate a self-learning area according to a current engine parameter of the hybrid vehicle; a deciding unit, configured to decide whether a self-learning torque value is allowed to be written into the self-learning area, based on the engine target torque deviation and the engine real torque deviation; a performing unit, configured to, if the self-learning torque value is allowed to be written into the self-learning area, perform self-learning torque calculation within the self-learning area based on the engine control torque deviation, and store the self-learning torque value into a corresponding storage unit; a first calibrating unit, configured to read the self-learning torque value from the storage unit, and add the self-learning torque value to the engine target torque to obtain the engine demand torque.

Further, the locating unit includes: a setting subunit, configured to set parameter thresholds of a plurality of engine working condition parameters, where the parameter thresholds include X engine rotational speed thresholds, Y engine load thresholds and Z engine temperature thresholds, and X, Y and Z are all positive integers greater than 0; a partitioning subunit, configured to partition a quantity of engine storage units by using quantities of the parameter thresholds, where each storage unit is configured to store a self-learning value; an acquiring subunit, configured to acquire current engine parameters of the hybrid vehicle; a comparing subunit, configured to compare the current engine parameters with corresponding parameter thresholds to obtain parameter indexes, where the parameter indexes include an engine rotational speed index, an engine load index and an engine temperature index, and a parameter index is used to represent a threshold interval where a current engine parameter is located; a locating subunit, configured to locate a storage unit serial number of a self-learning area by using the parameter indexes.

Further, the partitioning subunit is also configured to: partition an engine operating area into $(X+1) \times (Y+1)$ areas; partition the quantity of the engine storage units into $(X+1) \times (Y+1) \times Z$.

Further, the locating subunit is also configured to calculate a storage unit serial number i by using the following formula: i= the engine rotational speed index $\times$ Z + the engine load index $\times (X+1) \times Z$ + the engine temperature index.

Further, the deciding unit includes: a first determining subunit, configured to determine stability flags of the hybrid vehicle, where the stability flags include an engine target torque stability flag, an engine rotational speed stability flag and a generator torque stability flag; a deciding subunit, configured to decide whether the stability flags are all in a set state and whether a real-time working condition of the hybrid vehicle meets all the following preset conditions: an engine water temperature is greater than a set value; an engine completes startup and lasts for a period of time; the engine is in a torque control mode; an absolute value of the engine target torque deviation is less than or equal to a first threshold; an absolute value of the engine real torque deviation is greater than or equal to a second threshold; the engine target torque is greater than or equal to a third threshold; a second determining subunit, configured to determine that self-learning writing is allowed if the stability flags are all in the set state and the real-time working condition of the hybrid vehicle meets all the preset conditions.

Further, the performing unit includes: a processing subunit, configured to decide whether the engine control torque deviation is greater than or equal to a deviation threshold, and compare the self-learning torque value of the self-learning area with a threshold; a determining subunit, configured to: determine as a first self-learning state, if the engine control torque deviation is greater than or equal to a first deviation threshold and the self-learning torque value is less than an upper limit value; determine as a second self-learning state, if the engine control torque deviation is less than or equal to a second deviation threshold and the self-learning torque value is greater than a lower limit value; determine as a third self-learning state, if the engine control torque deviation is less than the first deviation threshold, or the engine control torque deviation is greater than the second deviation threshold, or the self-learning torque value is equal to the upper limit value or the lower limit value; a learning subunit, configured to: increase the self-learning torque value according to a preset rate if it is the first self-learning state; decrease the self-learning torque value at a preset rate if it is the second self-learning state; maintain a current self-learning torque value of the self-learning area if it is the third self-learning state; and an updating subunit, configured to update in real time the corresponding self-learning torque value in the storage unit of the self-learning area.

Further, the calibrating module includes: an operating unit, configured to operate an engine of the hybrid vehicle according to the engine demand torque, detect a real torque of the engine, and determine the real torque as a calculated engine torque; a second calibrating unit, configured to subtract the self-learning torque value from the calculated engine torque to obtain the engine signal torque.

According to another aspect of the embodiments of the present application, there is also provided a vehicle controller, which includes: a generator control unit, configured to transmit a generator signal torque to an engine control unit; the engine control unit, configured to receive the generator signal torque transmitted by the generator control unit, receive an engine target torque transmitted by a whole-vehicle control unit, and perform the method of the above embodiments; the whole-vehicle control unit, configured to receive an engine signal torque transmitted by the engine control unit.

According to another aspect of the embodiments of the present application, there is also provided a storage medium which includes a stored program, and the above steps are executed when the program is run.

According to another aspect of the embodiments of the present application, there is also provided an electronic device, which includes a processor, a communication interface, a memory and a communication bus, where the processor, the communication interface and the memory communicate with each other through the communication bus. The memory is configured to store a computer program, and the processor is configured to execute the steps in the above method by running the program stored in the memory.

An embodiment of the present application also provides a computer program product containing instructions. The computer program product includes a computer program, and when the computer program is executed by a processor, the steps in the above method are implemented.

The present application has the following beneficial effects.

1. In the present application, by taking the generator signal torque as a calibration benchmark for engine torque self-learning, the engine demand torque is automatically adjusted, and the engine signal torque is calibrated, realizing that the values of the engine target torque, the engine signal torque and the generator signal torque are close. The problems that the oil consumption performance is poor and the driving performance in the low-temperature limit working condition is poor due to the engine real torque being relatively large are solved, and the problem that the electric quantity during the emission loop testing is unbalanced due to the engine real torque being relatively small is solved.

2. By improving the torque precision, the oil consumption performance of the vehicle is improved, the low-temperature driving performance of the vehicle is enhanced, and the electric quantity is more easily balanced.

## BRIEF DESCRIPTION OF DRAWINGS

The accompanying drawings described herein are provided to provide a further understanding of the present application and form a part of the present application. The illustrative embodiments of the present application and their descriptions are used to explain the present application and do not form undue limitations on the present application. In the accompanying drawings:

FIG. 1 is a block diagram of a hardware structure of an engine control module according to an embodiment of the present application;

FIG. 2 is a flowchart of a method for calibrating an engine torque according to an embodiment of the present application;

FIG. 3 is a logic diagram for calculating an engine target torque deviation in an embodiment of the present application;

FIG. 4 is a logic diagram for calculating an engine real torque deviation in the present application;

FIG. 5 is a logic diagram for calculating an engine control torque deviation in the present application;

FIG. 6 is a logic diagram for calculating an engine rotational speed index in the present application;

FIG. 7 is a logic diagram for calculating an engine load index in the present application;

FIG. 8 is a logic diagram for calculating an engine intake air temperature index in the present application;

FIG. 9 is a schematic diagram of an engine operating area corresponding to a storage unit serial number in the present application;

FIG. 10 is a logic diagram for calculating an engine rotational speed stability flag in the present application;

FIG. 11 is a logic diagram for calculating an engine target torque stability flag in the present application;

FIG. 12 is a logic diagram for calculating a generator torque stability flag in the present application;

FIG. 13 is a logic diagram for calculating a self-learning state in the present application;

FIG. 14 is a logic diagram for calculating a self-learning value when a self-learning state is 1 in the present application;

FIG. 15 is a logic diagram for calculating a self-learning value when a self-learning state is 2 in the present application;

FIG. 16 is a logic diagram for calculating a self-learning value reading flag in the present application;

FIG. 17 is a logic diagram for calculating a self-learning reading value in the present application;

FIG. 18 is an implementation flowchart of an embodiment of the present application;

FIG. 19 is a structural block diagram of an apparatus for calibrating an engine torque according to an embodiment of the present application;

FIG. 20 is a schematic diagram of a vehicle controller in an embodiment of the present application.

## DESCRIPTION OF EMBODIMENTS

In order to make those skilled in the art better understand solutions of the present application, technical solutions in embodiments of the present application will be described clearly and thoroughly in combination with the accompanying drawings in embodiments of the present application. It is evident that the described embodiments are only some of the embodiments of the present application, not all of the embodiments. Based on the embodiments of the present application, all other embodiments obtained by those of ordinary skill in the art without creative work shall fall within the protection scope of the present application. It should be noted that in the absence of conflict, the embodiments in the present application and features in the embodiments can be combined with each other.

It should be noted that the terms such as "first" and "second" in the description and claims of the present application as well as those in the above accompanying drawings are used to distinguish similar objects, and are not necessarily used to describe a specific order or sequence. It should be understood that the data so used can be interchanged under appropriate circumstances, so that the embodiments of the present application described herein can be implemented in other orders than those illustrated or described herein. Furthermore, the terms "including" and "having" and any variations thereof are intended to cover non-exclusive inclusion. For example, processes, methods, products or devices that include a series of steps or units need not be limited to those steps or units explicitly listed, but may include other steps or units that are not explicitly listed or inherent to these processes, methods, products or devices.

Embodiment 1

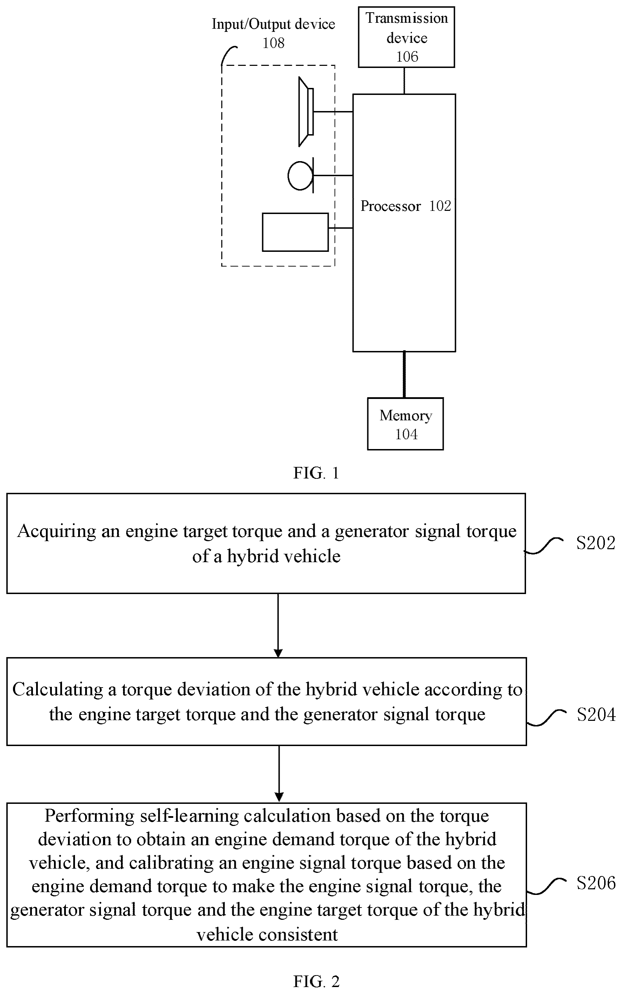

The method embodiment provided in Embodiment 1 of the present application can be implemented in a vehicle terminal, a vehicle control module, an engine control module (engine control unit), a hybrid vehicle, or a similar processing apparatus. Taking the implementation in an engine control module as an example, FIG. 1 is a block diagram of a hardware structure of an engine control module according to an embodiment of the present application. As shown in FIG. 1, the engine control module may include one or more (only one is shown in FIG. 1) processors 102 (the processor 102 may include but is not limited to a processing apparatus such as a microprocessor MCU or a programmable logic device FPGA) and a memory 104 for storing data. Optionally, the engine control module may also include a transmission device 106 for communication functions and an input/output device 108. It can be understood by those skilled in the art that the structure shown in FIG. 1 is only schematic, and does not limit the structure of the above engine control module. For example, the engine control module may also include more or fewer components than shown in FIG. 1, or may have a different configuration from that shown in FIG. 1.

The memory 104 can be configured to store an engine control module program, for example, a software program and modules of application software, such as an engine control module program corresponding to a method for calibrating an engine torque in an embodiment of the present application. The processor 102 executes various functional applications and data processing by running the engine control module program stored in the memory 104, that is, the above method is implemented. The memory 104 may include a high-speed random access memory, and may also include a non-volatile memory, such as one or more magnetic storage apparatuses, flash memories, or other non-volatile solid-state memories. In some examples, the memory 104 may further include memories remotely disposed with respect to the processor 102, and these remote memories may be connected to the engine control module through a network. Examples of the above network include, but are not limited to, the Internet, an intranet, a local area network, a mobile communication network, and a combination thereof.

The transmission device 106 is configured to receive or send data via a network. Specific examples of the network mentioned above may include a wireless network provided by the communication provider of the engine control module. In one example, the transmission device 106 includes a network adaptor (Network Interface Controller, NIC for short), which can be connected with other network devices through a base station so as to communicate with the Internet. In one example, the transmission device 106 may be a radio frequency (Radio Frequency, RF for short) module, which is configured to communicate with the Internet in a wireless manner.

In this embodiment, a method for calibrating an engine torque is provided. FIG. 2 is a flowchart of a method for calibrating an engine torque according to an embodiment of the present application. As shown in FIG. 2, this process includes the following steps.

Step S202: acquiring an engine target torque and a generator signal torque of a hybrid vehicle.

The hybrid vehicle of this embodiment is a vehicle equipped with two power units, namely, an engine and a generator, and may be a plug-in hybrid vehicle, a mild hybrid vehicle, a full hybrid vehicle and other types of hybrid vehicles.

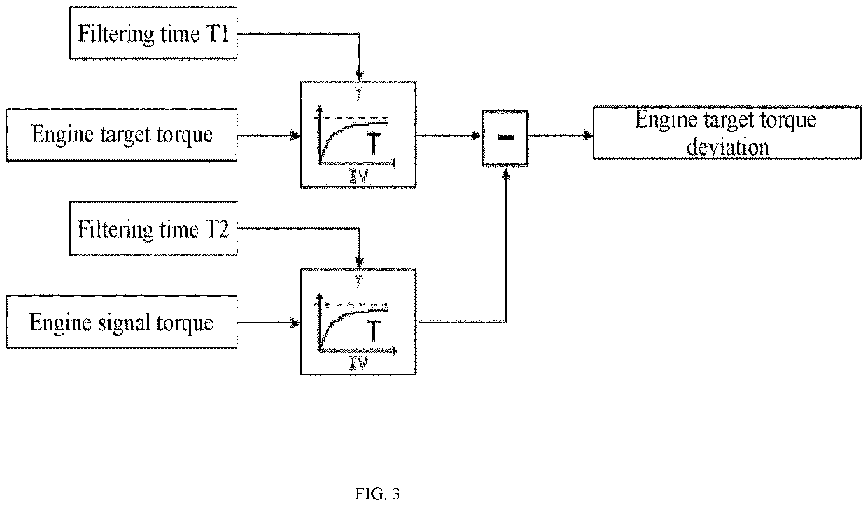

FIG. 3 is a schematic diagram of signal transmission in an embodiment of the present application. An engine control unit receives an engine target torque sent by a whole-vehicle control unit and a generator signal torque sent by a generator control unit. After the engine control unit generates a calibrated engine signal torque, the engine signal torque is sent to the whole-vehicle control unit.

Step S204: calculating a torque deviation of the hybrid vehicle according to the engine target torque and the generator signal torque.

The torque deviation of this embodiment may be an engine target torque deviation, an engine real torque deviation, an engine control torque deviation.

Step S206: performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent.

In this embodiment, the engine signal torque, the generator signal torque and the engine target torque of the hybrid vehicle being consistent means that the values of the three are close (the difference is less than the minimum threshold), and the three values tend to be consistent through the calibration.

Through the above steps, the engine target torque and the generator signal torque of the hybrid vehicle are acquired; the torque deviation of the hybrid vehicle are calculated according to the engine target torque and the generator signal torque; the self-learning calculation is performed based on the torque deviation to obtain the engine demand torque of the hybrid vehicle; and the engine signal torque is calibrated based on the engine demand torque to make the engine signal torque, the generator signal torque and the engine target torque of the hybrid vehicle consistent. The technical problem in the related art that the torque precision is low when there is engine manufacturing variation or environmental change for the hybrid vehicle is solved, and the user experience is improved. By taking the generator signal torque as the calibration benchmark for engine torque self-learning, the torque deviation learning can be automatically performed after the enabling condition of the self-learning working condition is met, the engine demand torque is automatically adjusted, and the engine signal torque is calibrated, realizing that the values of the engine target torque, the engine signal torque and the generator signal torque are close. The problems that the oil consumption performance is poor and the driving performance in the low-temperature limit working condition is poor due to the engine real torque being relatively large are solved, and the problem that the electric quantity during the emission loop testing is unbalanced due to the engine real torque being relatively small is solved. By improving the torque precision, the oil consumption performance of the vehicle is improved, the low-temperature driving performance of the vehicle is enhanced, and the electric quantity is more easily balanced.

In an implementation of this embodiment, the calculating the torque deviation of the hybrid vehicle according to the engine target torque and the generator signal torque includes: subtracting a historical engine signal torque of the immediately preceding control cycle from the engine target torque to obtain an engine target torque deviation; subtracting the generator signal torque from the historical engine signal torque of the immediately preceding control cycle to obtain an engine real torque deviation; subtracting the generator signal torque from the engine target torque to obtain a calculated engine control torque deviation; where torque deviations include: the engine target torque deviation, the engine real torque deviation and the engine control torque deviation.

When calculating the torque deviation, this embodiment includes calculation of the following three torque deviations: the engine target torque deviation, the engine real torque deviation and the engine control torque deviation. Explanation in detail is given here.

FIG. 3 is a logic diagram for calculating an engine target torque deviation in an embodiment of the present application. The engine signal torque (of the immediately preceding torque control cycle) obtained after undergoing low-pass filtering (filtering time T2, which can be calibrated) is subtracted from the engine target torque obtained after undergoing low-pass filtering (filtering time T1, which can be calibrated) to obtain the calculated engine target torque deviation, referred to as deviation A.

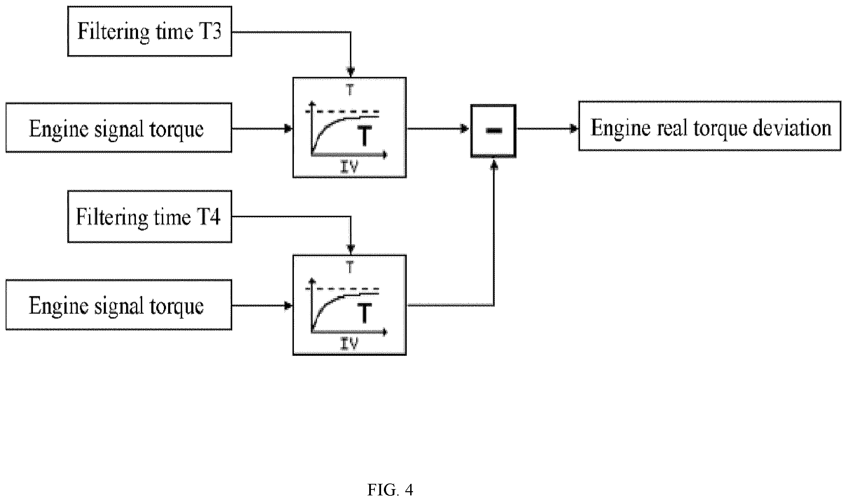

FIG. 4 is a logic diagram for calculating an engine real torque deviation in the present application. The calculation logic of the engine real torque deviation is shown in FIG. 4. The generator signal torque obtained after undergoing low-pass filtering (filtering time T4, which can be calibrated) is subtracted from the engine signal torque (of the immediately preceding torque control cycle) obtained after undergoing low-pass filtering (filtering time T3, which can be calibrated) to obtain the calculated engine real torque deviation, referred to as deviation B.

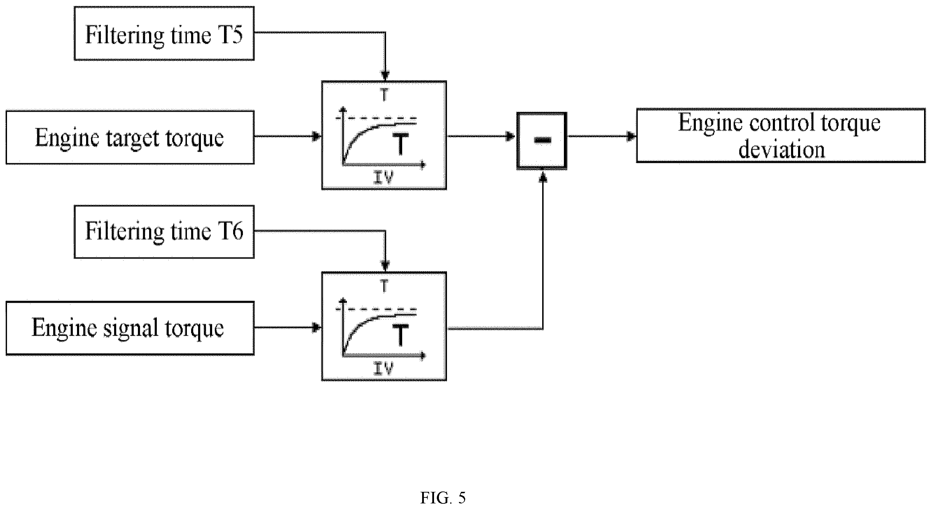

FIG. 5 is a logic diagram for calculating an engine control torque deviation in the present application. The calculation logic of the engine control torque deviation is shown in FIG. 5. The generator signal torque obtained after undergoing low-pass filtering (filtering time T6, which can be calibrated) is subtracted from the engine target torque obtained after undergoing low-pass filtering (filtering time T5, which can be calibrated) to obtain the calculated engine control torque deviation, referred to as deviation C.

In an implementation of this embodiment, the performing the self-learning calculation based on the torque deviation to obtain the engine demand torque of the hybrid vehicle includes: locating a self-learning area according to a current engine parameter of the hybrid vehicle; deciding whether a self-learning torque value is allowed to be written into the self-learning area, based on the engine target torque deviation and the engine real torque deviation; if the self-learning torque value is allowed to be written into the self-learning area, performing self-learning torque calculation within the self-learning area based on the engine control torque deviation, and storing the self-learning torque value into a corresponding storage unit; reading the self-learning torque value from the storage unit, and adding the self-learning torque value to the engine target torque to obtain the engine demand torque.

In an example based on the above implementation, the locating the self-learning area according to the current engine parameter of the hybrid vehicle includes: setting parameter thresholds of a plurality of engine working condition parameters, where the parameter thresholds include X engine rotational speed thresholds, Y engine load thresholds and Z engine temperature thresholds, and X, Y and Z are all positive integers greater than 0; partitioning the quantity of engine storage units by using the quantities of the parameter thresholds, where each storage unit is configured to store a self-learning value; acquiring current engine parameters of the hybrid vehicle; obtaining parameter indexes according to the comparison between the current engine parameters and corresponding parameter thresholds, where the parameter indexes include an engine rotational speed index, an engine load index and an engine temperature index, and a parameter index is used to represent a threshold interval where a current engine parameter is located; locating a storage unit serial number of a self-learning area by using the parameter indexes.

Optionally, the partitioning the quantity of the engine storage units by using the quantities of the parameter thresholds includes: partitioning an engine operating area into $(X+1) \times (Y+1)$ areas; partitioning the quantity of the engine storage units into $(X+1) \times (Y+1) \times Z$.

For example, X, Y, and Z are 4, 3, and 3, respectively. By setting 4 engine rotational speed thresholds, 3 engine load thresholds, and 3 temperature thresholds, the engine operating area is partitioned into 20 areas, with a total of 60 storage units.

Optionally, the locating the storage unit serial number of the self-learning area by using the parameter indexes includes: calculating a storage unit serial number i by using the following formula: i= the engine rotational speed index $\times$ Z + the engine load index $\times$ (X+1) $\times$ Z + the engine temperature index.

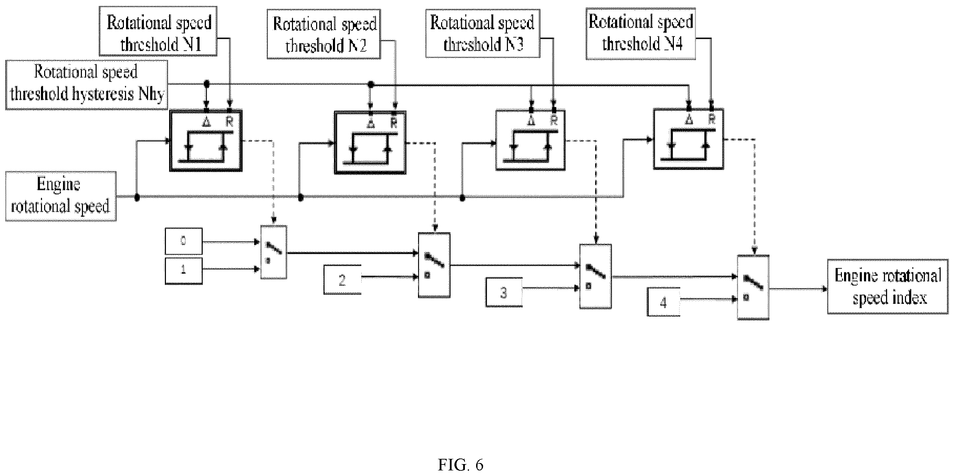

FIG. 6 is a logic diagram for calculating an engine rotational speed index in the present application. Four engine rotational speed thresholds N1, N2, N3 and N4, as well as a rotational speed threshold hysteresis Nhy, are set. If an engine rotational speed is greater than the threshold N4, the engine rotational speed index is equal to 4. If the engine rotational speed is less than or equal to (N4-Nhy) and the engine rotational speed is greater than N3, the engine rotational speed index is equal to 3. If the engine rotational speed is less than or equal to (N3-Nhy) and the engine rotational speed is greater than N2, the engine rotational speed index is equal to 2. If the engine rotational speed is less than or equal to (N2-Nhy) and the engine rotational speed is greater than N1, the engine rotational speed index is equal to 1. If the engine rotational speed is less than or equal to (N1-Nhy), the engine rotational speed index is equal to 0.

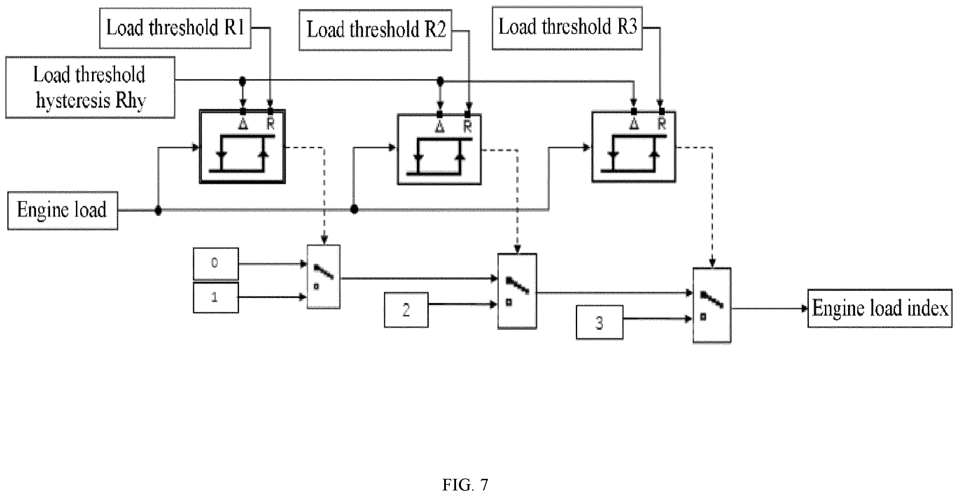

FIG. 7 is a logic diagram for calculating an engine load index in the present application. As shown in FIG. 7, three engine rotational speed thresholds R1, R2 and R3, as well as a load threshold hysteresis Rhy, are set. If an engine load is greater than the threshold R3, the engine load index is equal to 3. If the engine load is less than or equal to (R3-Rhy) and the engine load is greater than R2, the engine load index is equal to 2. If the engine load is less than or equal to (R2-Rhy) and the engine load is greater than R1, the engine load index is equal to 1. If the engine load is less than or equal to (R1-Rhy), the engine load index is equal to 0.

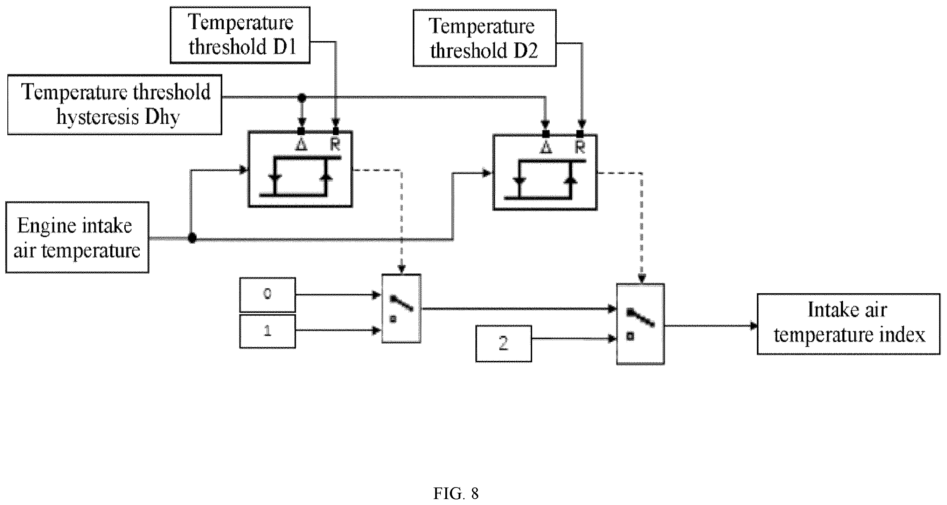

FIG. 8 is a logic diagram for calculating an engine intake air temperature index in the present application. As shown in FIG. 8, two engine intake air temperature thresholds D1 and D2, as well as a temperature threshold hysteresis Dhy, are set. If an engine intake air temperature is greater than the threshold D2, the intake air temperature index is equal to 2. If the intake air temperature is less than or equal to (D2-Dhy) and the intake air temperature is greater than D1, the intake air temperature index is equal to 1. If the intake air temperature is less than or equal to (D1-Dhy), the intake air temperature index is equal to 0.

The storage unit serial number i is determined according to the engine rotational speed index, the engine load index and the engine temperature index. The calculation formula of the storage unit serial number is: i= the engine rotational speed index $\times$ 3 + the engine load index $\times$ 15 + the engine temperature index.

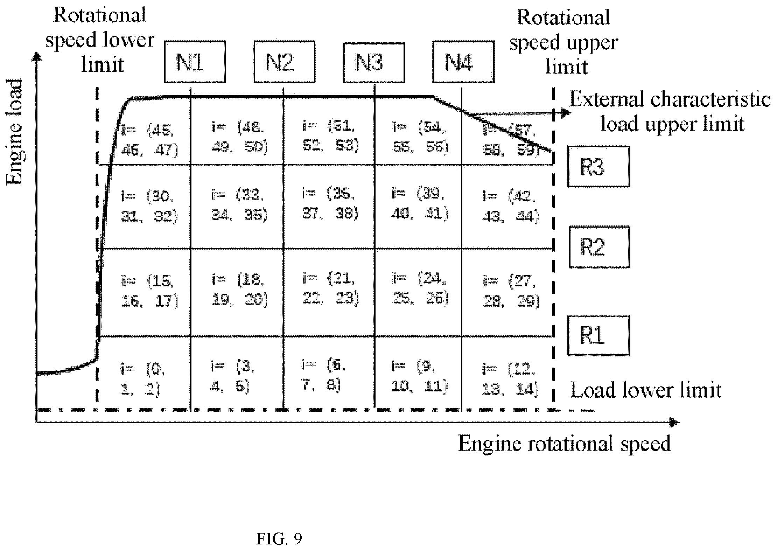

Under a certain working condition (engine rotational speed, engine load, intake air temperature) for engine operating, the corresponding storage unit can be found according to the storage unit serial number, and each storage unit has a self-learning value stored therein. FIG. 9 is a schematic diagram of an engine operating area corresponding to a storage unit serial number in the present application. A schematic diagram of partitioning of working conditions for engine operating corresponding to various storage unit serial numbers is as shown in FIG. 9.

In an example based on the above implementation, the deciding whether the self-learning torque value is allowed to be written into the self-learning area includes: determining stability flags of the hybrid vehicle, where the stability flags include an engine target torque stability flag, an engine rotational speed stability flag, and a generator torque stability flag; deciding whether the stability flags are all in a set state, and deciding whether a real-time working condition of the hybrid vehicle meets all the following preset conditions: an engine water temperature is greater than a set value; the engine completes startup and lasts for a period of time; the engine is in a torque control mode; the absolute value of the engine target torque deviation is less than or equal to a first threshold; the absolute value of the engine real torque deviation is greater than or equal to a second threshold; the engine target torque is greater than or equal to a third threshold; if the stability flags are all in the set state and the real-time working condition of the hybrid vehicle meets all the preset conditions, determining that self-learning writing is allowed.

In this example, the stability flags of the hybrid vehicle include the engine rotational speed stability flag, the engine target torque stability flag and the generator torque stability flag. Explanation in detail is given here.

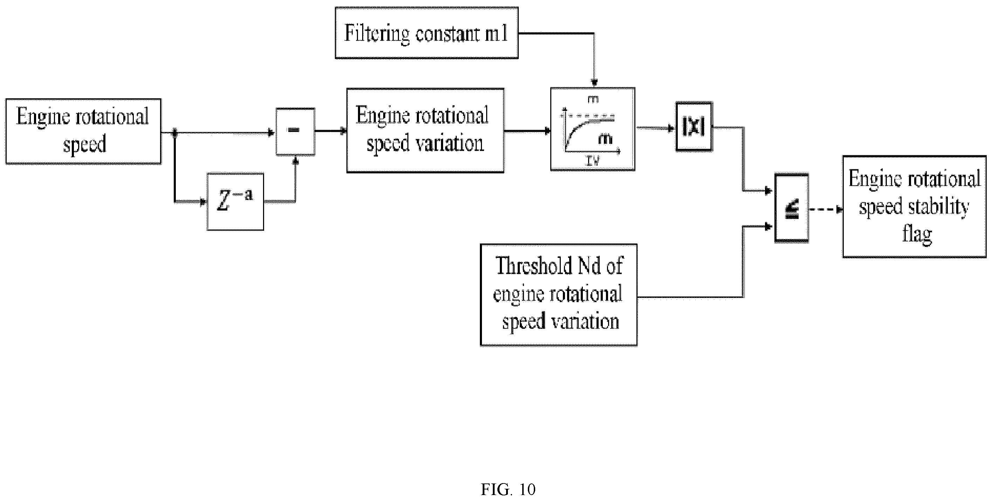

FIG. 10 is a logic diagram for calculating an engine rotational speed stability flag in the present application. The engine rotational speed stability flag is determined by an engine rotational speed variation and a corresponding threshold. The engine rotational speed before a calculation periods is subtracted from the engine rotational speed to obtain the engine rotational speed variation. The engine rotational speed variation is first processed by low-pass filtering (filtering constant is m1), and then undergoes absolute value processing to obtain a processed engine rotational speed variation. If the processed engine rotational speed variation is less than or equal to a threshold Nd, the engine rotational speed stability flag is set. If the processed engine rotational speed variation is greater than the threshold Nd, the engine rotational speed stability flag is reset.

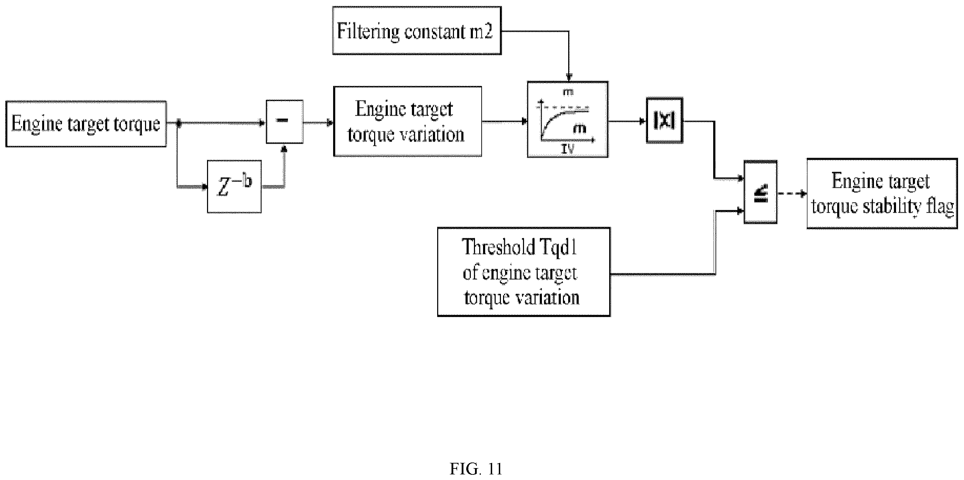

FIG. 11 is a logic diagram for calculating an engine target torque stability flag in the present application. The engine target torque stability flag is determined by an engine target torque variation and a corresponding threshold. The engine target torque before b calculation periods is subtracted from the engine target torque to obtain the engine target torque variation. The engine target torque variation is first processed by low-pass filtering (filtering constant is m2), and then undergoes absolute value processing to obtain a processed engine target torque variation. If the processed engine target torque variation is less than or equal to a threshold Tqd1, the engine target torque stability flag is set. If the processed engine target torque variation is greater than the threshold Tqd1, the engine target torque stability flag is reset.

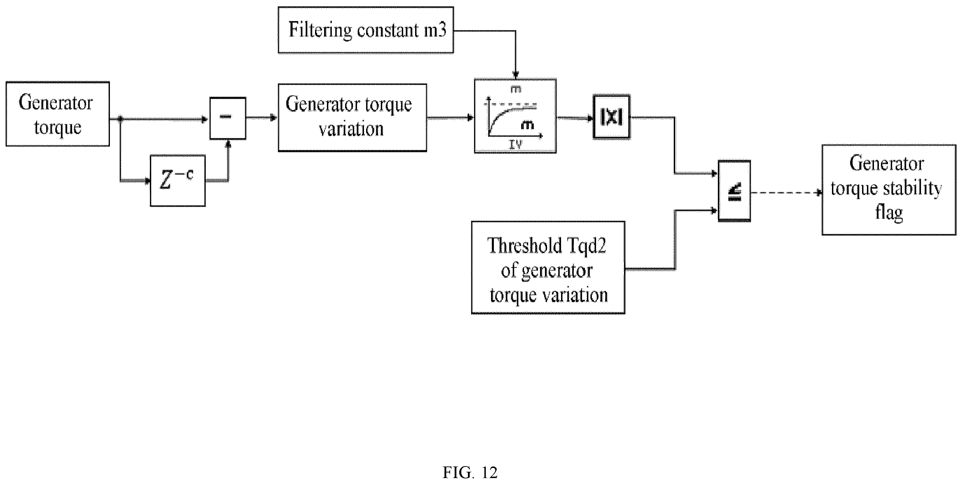

FIG. 12 is a logic diagram for calculating a generator torque stability flag in the present application. The generator torque stability flag is determined by a generator torque variation and a corresponding threshold. The generator torque before c calculation periods is subtracted from the generator torque to obtain the generator torque variation. The generator torque variation is first processed by low-pass filtering (filtering constant is m3), and then undergoes absolute value processing to obtain a processed generator torque variation. If the processed generator torque variation is less than or equal to a threshold Tqd2, the generator torque stability flag is set. If the processed generator torque variation is greater than the threshold Tqd2, the generator torque stability flag is reset.

When all the following nine conditions are met, a self-learning write-allow flag is set. When the following nine conditions are not all met, the self-learning write-allow flag is reset. All the conditions include:

condition 1, the engine target torque stability flag is in the set state;
condition 2, the engine rotational speed stability flag is in the set state;
condition 3, the generator torque stability flag is in the set state;
condition 4, the engine water temperature is greater than a threshold D3;
condition 5, the engine has completed startup and lasted for a period of time T7;
condition 6, the engine is in the torque control mode;
condition 7, the absolute value of torque deviation A is less than or equal to a threshold Tq1;
condition 8, the absolute value of torque deviation B is greater than or equal to a threshold Tq2;
condition 9, the engine target torque is greater than or equal to a threshold Tq3.

In an example based on the above implementation, the performing the self-learning torque calculation within the self-learning area and storing the self-learning value into the corresponding storage unit includes: deciding whether the engine control torque deviation is greater than or equal to a deviation threshold, and comparing the self-learning torque value of the self-learning area with a threshold; if the engine control torque deviation is greater than or equal to a first deviation threshold and the self-learning torque value is less than an upper limit value, determining as a first self-learning state; if the engine control torque deviation is less than or equal to a second deviation threshold and the self-learning torque value is greater than a lower limit value, determining as a second self-learning state; if the engine control torque deviation is less than the first deviation threshold, or the engine control torque deviation is greater than the second deviation threshold, or the self-learning torque value is equal to the upper limit value or the lower limit value, determining as a third self-learning state; if it is the first self-learning state, increasing the self-learning torque value at a preset rate; if it is the second self-learning state, decreasing the self-learning torque value at a preset rate; if it is the third self-learning state, maintaining the current self-learning torque value of the self-learning area; updating in real time the corresponding self-learning torque value in the storage unit of the self-learning area.

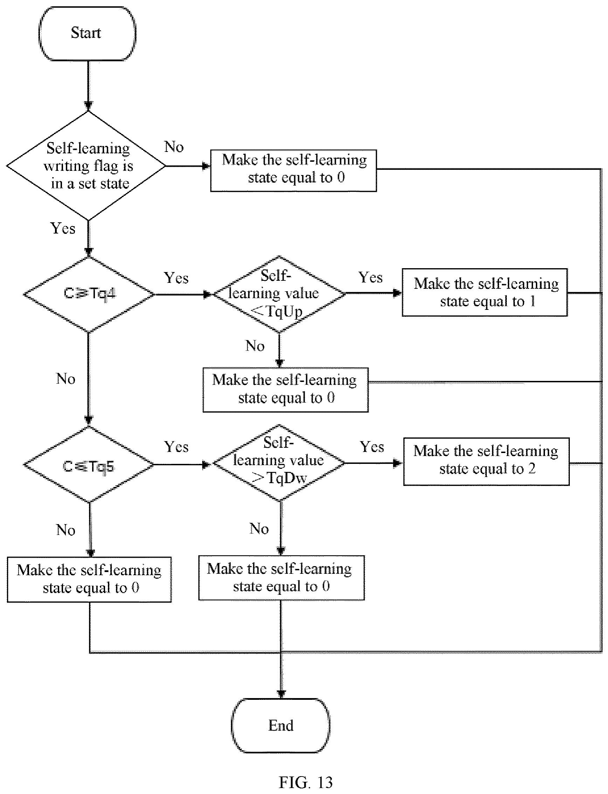

FIG. 13 is a logic diagram for calculating a self-learning state in the present application, which is used to illustrate a process of self-learning state decision. If the self-learning write-allow flag is in the set state, torque deviation C is greater than or equal to a torque threshold Tq4 and the self-learning value is less than the upper limit TqUp, then the self-learning state is 1 (the first self-learning state). If the self-learning write-allow flag is in the set state, the torque deviation C is less than or equal to a threshold Tq5 and the self-learning value is greater than the lower limit TqDw, then the self-learning state is 2 (the second self-learning state). In all other cases, the self-learning state is 0 (the third self-learning state).

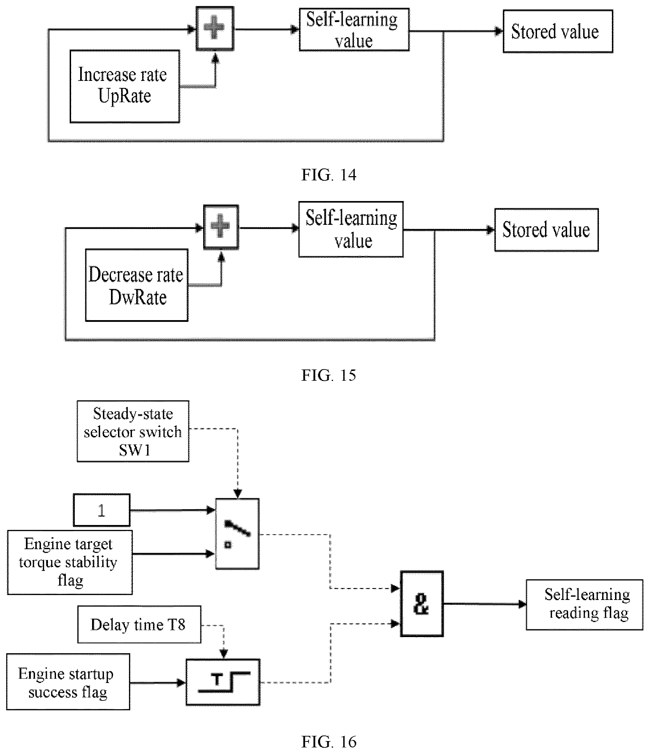

FIG. 14 is a logic diagram for calculating a self-learning value when the self-learning state is 1 in the present application, and FIG. 15 is a logic diagram for calculating a self-learning value when the self-learning state is 2 in the present application, which are respectively used to illustrate self-learning torque calculation processes in different states. The initial value of the self-learning value is 0; if the self-learning state is 1, as shown in FIG. 14, the self-learning value is self-increased at an increase rate UpRate; if the self-learning state is 2, as shown in FIG. 15, the self-learning value is self-decreased at a decrease rate DwRate; if the self-learning state is 0, the self-learning value remains unchanged as at the previous moment; the self-learning value is updated to the storage unit in real time and saved, and will not be erased due to power-on, power-off or other situations.

Optionally, after the torque value is obtained by the self-learning calculation, the step of reading the self-learning value can be performed, including self-learning read-enable decision and self-learning reading value calculation.

FIG. 16 is a logic diagram for calculating a self-learning value reading flag in the present application, which is used to illustrate a process of self-learning read-enable decision. In a case that an engine startup completion flag is in the set state and delay time T8 elapses, if a steady-state selector switch SW1 is equal to 0, the self-learning reading flag is set. In a case that the engine startup completion flag is in the set state and the delay time T8 elapses, if the steady-state selector switch SW1 is equal to 1 and the engine target torque stability flag is in the set state, the self-learning reading flag is set. In other cases, the self-learning reading flag is reset.

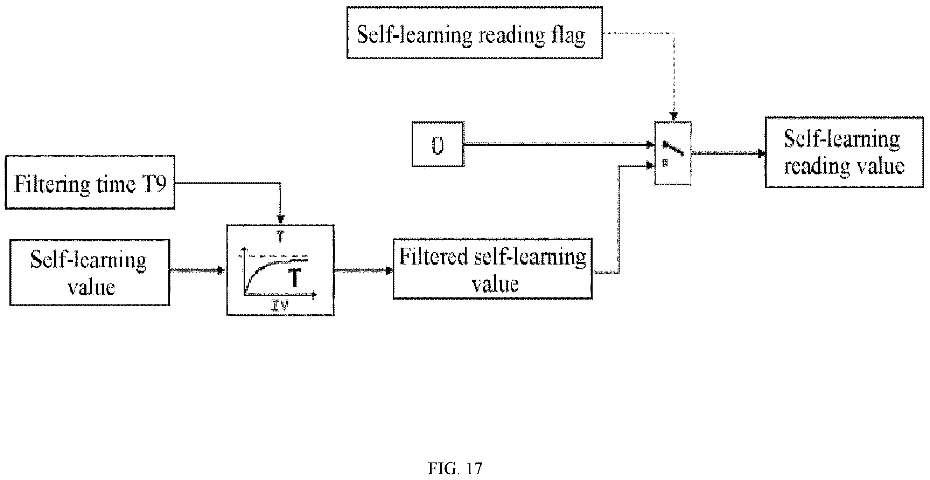

FIG. 17 is a logic diagram for calculating a self-learning reading value in the present application, which is used to illustrate a process of self-learning reading value calculation. If the self-learning reading flag is in the reset state, the self-learning reading value is 0. If the self-learning reading flag is 1, the self-learning reading value is obtained by the self-learning value of each storage unit undergoing low-pass filtering (filtering time is T9).

In this embodiment, the calibrating the engine signal torque based on the engine demand torque includes: operating the engine of the hybrid vehicle according to the engine demand torque, detecting a real torque of the engine, and determining the real torque as a calculated engine torque; subtracting the self-learning torque value from the calculated engine torque to obtain the engine signal torque.

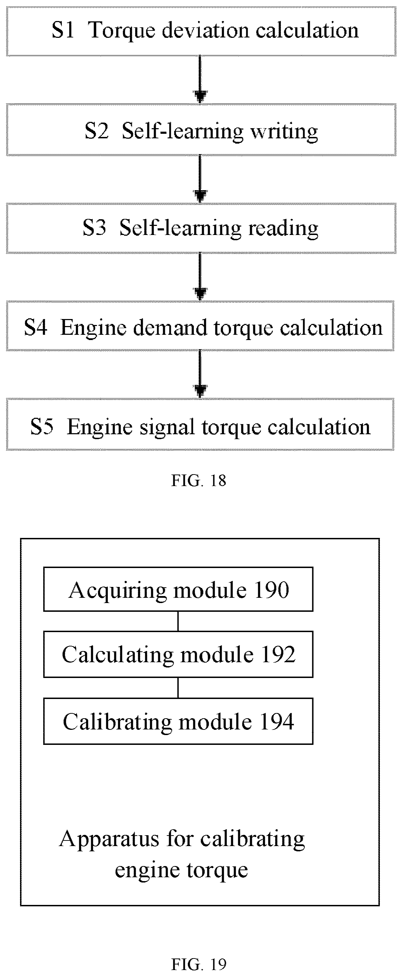

FIG. 18 is an implementation flowchart of an embodiment of the present application, which provides an engine torque self-learning method. An engine controller acquires an engine target torque and a generator signal torque through CAN communication, performs torque self-learning according to a torque deviation, and adjusts an engine demand torque to make an engine signal torque, the generator signal torque and the engine target torque consistent. The process includes the following.

S1, torque deviation calculation.

S2, self-learning writing.

Optionally, step S2 includes three parts: S21, self-learning area partitioning; S22, self-learning write enabling; S23, self-learning torque calculation.

S3, self-learning reading.

Optionally, step S3 includes two parts: S31, self-learning read-enable decision; S32, self-learning reading value calculation.

S4, engine demand torque calculation.

A calculation logic for the engine demand torque calculation of step S4 is that the engine demand torque is equal to the engine target torque plus the self-learning reading value.

S5, engine torque signal calculation.

A calculation logic for the engine torque signal calculation of step S5 is that the engine signal torque is equal to the calculated engine torque minus the self-learning reading value.

By adopting the solution of this embodiment, by taking the generator signal torque as the calibration benchmark for engine torque self-learning, the torque deviation learning can be automatically performed after the enabling condition of the self-learning working condition is met, and the engine demand torque can be automatically adjusted, realizing that the values of the engine target torque, the engine signal torque and the generator signal torque are close, and improving the engine torque precision. By improving the torque precision, the oil consumption performance can be improved, the low-temperature driving performance can be enhanced, and the balance of electric quantity can be achieved more easily.

Through the description of the above implementations, those skilled in the art can clearly understand that the method according to the above embodiments can be implemented by means of software and a necessary general hardware platform, and of course it can also be implemented by hardware, but in many cases the former is a better implementation. Based on this understanding, the technical solution of the present application in essence, or the part that contributes to the prior art, can be embodied in the form of a software product. The computer software product is stored in a storage medium (such as ROM/RAM, a magnetic disk, an optical disk) and includes several instructions for causing a terminal device (which may be a mobile phone, a computer, a server, or a network device, etc.) to execute the methods described in various embodiments of the present application.

Embodiment 2

In this embodiment, there is also provided an apparatus for calibrating an engine torque, which is configured to implement the above-mentioned embodiment and preferred implementations, and the description that has been illustrated is not repeated here. As used below, the term "module" may be a combination of software and/or hardware that implements a predetermined function. Although the apparatus described in the following embodiment is preferably implemented in software, the implementation of hardware, or a combination of software and hardware, is also possible and contemplated.

FIG. 19 is a structural block diagram of an apparatus for calibrating an engine torque according to an embodiment of the present application. As shown in FIG. 19, the apparatus includes:

an acquiring module 190, configured to acquire an engine target torque and a generator signal torque of a hybrid vehicle;

a calculating module 192, configured to calculate a torque deviation of the hybrid vehicle according to the engine target torque and the generator signal torque;

a calibrating module 194, configured to perform self-learning calculation based on the torque deviation to obtain an engine demand torque of the hybrid vehicle, and calibrate an engine signal torque based on the engine demand torque to make the engine signal torque, the generator signal torque and the engine target torque of the hybrid vehicle consistent.

Optionally, the calculating module includes: a first calculating unit, configured to subtract a historical engine signal torque of an immediately preceding control cycle from the engine target torque to obtain an engine target torque deviation; a second calculating unit, configured to subtract the generator signal torque from the historical engine signal torque of the immediately preceding control cycle to obtain an engine real torque deviation; a third calculate unit, configured to subtract the generator signal torque from the engine target torque to obtain a calculated engine control torque deviation; where torque deviations include the engine target torque deviation, the engine real torque deviation and the engine control torque deviation.

Optionally, the calibrating module includes: a locating unit, configured to locate a self-learning area according to a current engine parameter of the hybrid vehicle; a deciding unit, configured to decide whether a self-learning torque value is allowed to be written into the self-learning area, based on the engine target torque deviation and the engine real torque deviation; a performing unit, configured to, if the self-learning torque value is allowed to be written into the self-learning area, perform self-learning torque calculation within the self-learning area based on the engine control torque deviation, and store the self-learning torque value into a corresponding storage unit; a first calibrating unit, configured to read the self-learning torque value from the storage unit, and add the self-learning torque value to the engine target torque to obtain the engine demand torque.

Optionally, the locating unit includes: a setting subunit, configured to set parameter thresholds of a plurality of engine working condition parameters, where the parameter thresholds include X engine rotational speed thresholds, Y engine load thresholds and Z engine temperature thresholds, and X, Y and Z are all positive integers greater than 0; a partitioning subunit, configured to partition a quantity of engine storage units by using quantities of the parameter thresholds, where each storage unit is configured to store a self-learning value; an acquiring subunit, configured to acquire current engine parameters of the hybrid vehicle; a comparing subunit, configured to compare the current engine parameters with corresponding parameter thresholds to obtain parameter indexes, where the parameter indexes include an engine rotational speed index, an engine load index and an engine temperature index, and a parameter index is used to represent a threshold interval where a current engine parameter is located; a locating subunit, configured to locate a storage unit serial number of a self-learning area by using the parameter indexes.

Optionally, the partitioning subunit is also configured to: partition an engine operating area into $(X+1) \times (Y+1)$ areas; partition the quantity of the engine storage units into $(X+1) \times (Y+1) \times Z$.

Optionally, the locating subunit is also configured to calculate a storage unit serial number i by using the following formula: i= the engine rotational speed index $\times$ Z + the engine load index $\times$ (X+1) $\times$ Z + the engine temperature index.

Optionally, the deciding unit includes: a first determining subunit, configured to determine stability flags of the hybrid vehicle, where the stability flags include an engine target torque stability flag, an engine rotational speed stability flag and a generator torque stability flag; a deciding subunit, configured to decide whether the stability flags are all in a set state and whether a real-time working condition of the hybrid vehicle meets all the following preset conditions: an engine water temperature is greater than a set value; an engine completes startup and lasts for a period of time; the engine is in a torque control mode; an absolute value of the engine target torque deviation is less than or equal to a first threshold; an absolute value of the engine real torque deviation is greater than or equal to a second threshold; the engine target torque is greater than or equal to a third threshold; a second determining subunit, configured to determine that self-learning writing is allowed if the stability flags are all in the set state and the real-time working condition of the hybrid vehicle meets all the preset conditions.

Optionally, the performing unit includes: a processing subunit, configured to decide whether the engine control torque deviation is greater than or equal to a deviation threshold, and compare the self-learning torque value of the self-learning area with a threshold; a determining subunit, configured to: determine as a first self-learning state, if the engine control torque deviation is greater than or equal to a first deviation threshold and the self-learning torque value is less than an upper limit value; determine as a second self-learning state, if the engine control torque deviation is less than or equal to a second deviation threshold and the self-learning torque value is greater than a lower limit value; determine as a third self-learning state, if the engine control torque deviation is less than the first deviation threshold, or the engine control torque deviation is greater than the second deviation threshold, or the self-learning torque value is equal to the upper limit value or the lower limit value; a learning subunit, configured to: increase the self-learning torque value according to a preset rate if it is the first self-learning state; decrease the self-learning torque value at a preset rate if it is the second self-learning state; maintain a current self-learning torque value of the self-learning area if it is the third self-learning state; and an updating subunit, configured to update in real time the corresponding self-learning torque value in the storage unit of the self-learning area.

Optionally, the calibrating module includes: an operating unit, configured to operate an engine of the hybrid vehicle according to the engine demand torque, detect a real torque of the engine, and determine the real torque as a calculated engine torque; a second calibrating unit, configured to subtract the self-learning torque value from the calculated engine torque to obtain the engine signal torque.

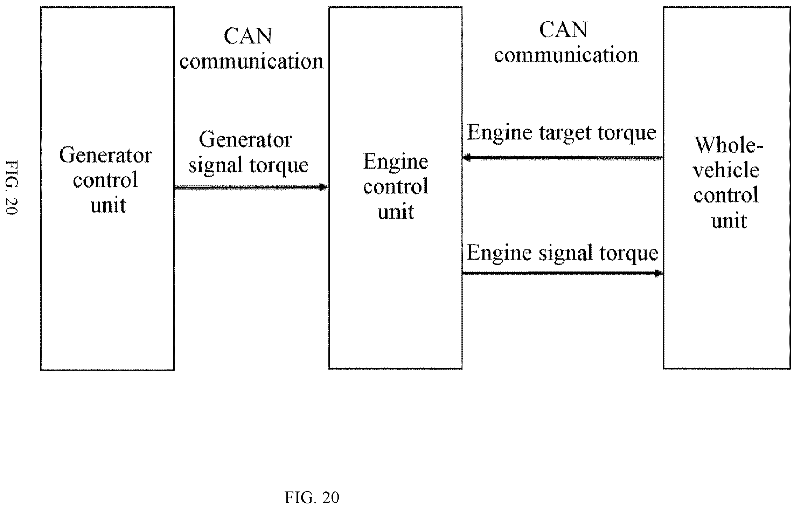

According to an aspect of the embodiments of the present application, there is also provided a vehicle controller. FIG. 20 is a schematic diagram of a vehicle controller in an embodiment of the present application, which includes: a generator control unit, configured to transmit a generator signal torque to an engine control unit; the engine control unit, configured to receive the generator signal torque transmitted by the generator control unit and an engine target torque transmitted by a whole-vehicle control unit, including the apparatus for calibrating the engine torque in the above embodiment; the whole-vehicle control unit, configured to receive an engine signal torque transmitted by the engine control unit.

It should be noted that the above modules can be implemented by software or hardware, and the latter can be implemented in the following ways (but not limited thereto): the above modules are all located in the same processor; or, the above modules are located in different processors in any combinations.

Embodiment 3

An embodiment of the present application also provides a storage medium, in which a computer program is stored, and the computer program is configured to implement the steps in any one of the above method embodiments when executed.

Optionally, in this embodiment, the storage medium may be configured to store a computer program for executing the following steps:

S1, acquiring an engine target torque and a generator signal torque of a hybrid vehicle.

S2, calculating a torque deviation of the hybrid vehicle according to the engine target torque and the generator signal torque.

S3, performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent.

Optionally, in this embodiment, the above storage medium may include, but is not limited to, a USB flash drive, a read-only memory (Read-Only Memory, ROM for short), a random access memory (Random Access Memory, RAM for short), a mobile hard disk, a magnetic disk, an optical disk or other medium that can store a computer program.

An embodiment of the present application also provides an electronic apparatus, which includes a memory and a processor, where a computer program is stored in the memory, and the processor is configured to run the computer program to execute the steps in any one of the above method embodiments.

Optionally, the above electronic apparatus may further include a transmission device and an input/output device, where the transmission device is connected with the above processor and the input/output device is connected with the above processor.

Optionally, in this embodiment, the above processor can be configured to execute the following steps through a computer program:

S1, acquiring an engine target torque and a generator signal torque of a hybrid vehicle.

S2, calculating a torque deviation of the hybrid vehicle according to the engine target torque and the generator signal torque.

S3, performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent.

Optionally, specific examples in this embodiment can be found in the examples described in the above embodiments and optional implementations, which will not be repeated here in this embodiment.

The above serial numbers of embodiments of the present application are only for description, and do not represent the superiority or inferiority of the embodiments.

In the above embodiments of the present application, the description of each embodiment has its own emphasis. For the parts not detailed in one embodiment, please refer to the relevant descriptions of other embodiments.

In several embodiments provided by the present application, it should be understood that the disclosed technical contents can be implemented in other ways. The apparatus embodiments described above are only schematic. For example, the division of the units is only a logical function division, and there may be another division manner in actual implementation, for example, multiple units or components may be combined or integrated into another system, or some features may be ignored or not implemented. Additionally, the mutual coupling or direct coupling or communication connection shown or discussed may be indirect coupling or communication connection through some interfaces, units or modules, which may be in electrical or other forms.

The units described as separate components may or may not be physically separated, and the components displayed as units may or may not be physical units, that is, they may be located in one place or distributed to multiple network units. Some or all of the units may be selected according to actual needs to implement the purpose of the solution of the embodiment.

In addition, the functional units in the embodiments of the present application may be integrated into one processing unit, or each unit may exist physically alone, or two or more units may be integrated into one unit. The above integrated unit may be implemented in the form of hardware or software functional units.

The integrated unit can be stored in a computer-readable storage medium if it is implemented in the form of a software functional unit and sold or used as an independent product. Based on this understanding, the technical solution of the present application in essence, or the part that contributes to the prior art, or the whole or part of the technical solution, may be embodied in the form of a software product. The computer software product is stored in a storage medium and includes several instructions for causing a computer device (such as a personal computer, a server or a network device, etc.) to execute all or some of the steps of the method described in various embodiments of the present application. The aforementioned storage medium includes: a USB flash drive, a read-only memory (ROM, Read-Only Memory), a random access memory (RAM, Random Access Memory), a removable hard disk, a magnetic disk, an optical disk or other medium that can store program codes.

The above are only preferred implementations of the present application. It should be pointed out that for those skilled in the prior art, several improvements and refinements can be made without departing from the principles of the present application, and these improvements and refinements should also be regarded as within the protection scope of the present application.

**Claims**

1. A method for calibrating an engine torque, comprising:

   acquiring an engine target torque and a generator signal torque of a hybrid vehicle;
   calculating a torque deviation of the hybrid vehicle according to the engine target torque and the generator signal torque;
   performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent.

2. The method according to claim 1, wherein the calculating the torque deviation of the hybrid vehicle according to the engine target torque and the generator signal torque comprises:

   subtracting a historical engine signal torque of an immediately preceding control cycle from the engine target torque to obtain an engine target torque deviation;
   subtracting the generator signal torque from the historical engine signal torque of the immediately preceding control cycle to obtain an engine real torque deviation;
   subtracting the generator signal torque from the engine target torque to obtain a calculated engine control torque deviation;
   wherein torque deviations comprise the engine target torque deviation, the engine real torque deviation and the engine control torque deviation.

3. The method according to claim 1, wherein the performing the self-learning calculation based on the torque deviation to obtain the engine demand torque of the hybrid vehicle comprises:

   locating a self-learning area according to a current engine parameter of the hybrid vehicle;
   deciding whether a self-learning torque value is allowed to be written into the self-learning area, based on an engine target torque deviation and an engine real torque deviation;
   if the self-learning torque value is allowed to be written into the self-learning area, performing self-learning torque calculation within the self-learning area based on an engine control torque deviation, and storing the self-learning torque value into a corresponding storage unit;
   reading the self-learning torque value from the storage unit, and adding the self-learning torque value to the engine target torque to obtain the engine demand torque.

4. The method according to claim 3, wherein the locating the self-learning area according to the current engine parameter of the hybrid vehicle comprises:

setting parameter thresholds of a plurality of engine working condition parameters, wherein the parameter thresholds comprise X engine rotational speed thresholds, Y engine load thresholds and Z engine temperature thresholds, and X, Y and Z are all positive integers greater than 0;
partitioning a quantity of engine storage units by using quantities of the parameter thresholds, wherein each storage unit is configured to store a self-learning value;
acquiring current engine parameters of the hybrid vehicle;
obtaining parameter indexes according to a comparison between the current engine parameters and corresponding parameter thresholds, wherein the parameter indexes comprise an engine rotational speed index, an engine load index and an engine temperature index, and a parameter index is used to represent a threshold interval where a current engine parameter is located;
locating a storage unit serial number of a self-learning area by using the parameter indexes.

5. The method according to claim 4, wherein the partitioning the quantity of the engine storage units by using the quantities of the parameter thresholds comprises:

partitioning an engine operating area into $(X+1) \times (Y+1)$ areas;
partitioning the quantity of the engine storage units into $(X+1) \times (Y+1) \times Z$.

6. The method according to claim 4, wherein the locating the storage unit serial number of the self-learning area by using the parameter indexes comprises:
calculating a storage unit serial number i by using the following formula:

$$i = \text{the engine rotational speed index} \times Z + \text{the engine load index} \times (X + 1) \times Z + \text{the engine temperature index}.$$

7. The method according to claim 3, wherein the deciding whether the self-learning torque value is allowed to be written into the self-learning area, based on the engine target torque deviation and the engine real torque deviation, comprises:

determining stability flags of the hybrid vehicle, wherein the stability flags comprise an engine target torque stability flag, an engine rotational speed stability flag, and a generator torque stability flag;
deciding whether the stability flags are all in a set state, and deciding whether a real-time working condition of the hybrid vehicle meets all the following preset conditions: an engine water temperature is greater than a set value; an engine completes startup and lasts for a period of time; the engine is in a torque control mode; an absolute value of the engine target torque deviation is less than or equal to a first threshold; an absolute value of the engine real torque deviation is greater than or equal to a second threshold; the engine target torque is greater than or equal to a third threshold;
if the stability flags are all in the set state and the real-time working condition of the hybrid vehicle meets all the preset conditions, determining that self-learning writing is allowed.

8. The method according to claim 3, wherein the performing the self-learning torque calculation within the self-learning area based on the engine control torque deviation, and storing the self-learning torque value into the corresponding storage unit comprises:

deciding whether the engine control torque deviation is great than or equal to a deviation threshold, and comparing the self-learning torque value of the self-learning area with a threshold;
if the engine control torque deviation is greater than or equal to a first deviation threshold and the self-learning torque value is less than an upper limit value, determining as a first self-learning state; if the engine control torque deviation is less than or equal to a second deviation threshold and the self-learning torque value is greater than a lower limit value, determining as a second self-learning state; if the engine control torque deviation is less than the first deviation threshold, or the engine control torque deviation is greater than the second deviation threshold, or the self-learning torque value is equal to the upper limit value or the lower limit value, determining as a third self-learning state;
if it is the first self-learning state, increasing the self-learning torque value at a preset rate; if it is the second self-learning state, decreasing the self-learning torque value at a preset rate; if it is the third self-learning state, maintaining a current self-learning torque value of the self-learning area;

updating in real time the corresponding self-learning torque value in the storage unit of the self-learning area.

9. The method according to claim 1, wherein the calibrating the engine signal torque based on the engine demand torque comprises:

operating an engine of the hybrid vehicle according to the engine demand torque, detecting a real torque of the engine, and determining the real torque as a calculated engine torque;

subtracting a self-learning torque value from the calculated engine torque to obtain the engine signal torque.

10. An apparatus for calibrating an engine torque, comprising:

an acquiring module, configured to acquire an engine target torque and a generator signal torque of a hybrid vehicle;

a calculating module, configured to calculate a torque deviation of the hybrid vehicle according to the engine target torque and the generator signal torque;

a calibrating module, configured to perform self-learning calculation based on the torque deviation to obtain an engine demand torque of the hybrid vehicle, and calibrate an engine signal torque based on the engine demand torque to make the engine signal torque, the generator signal torque and the engine target torque of the hybrid vehicle consistent.

11. A vehicle controller, comprising:

a generator control unit, configured to transmit a generator signal torque to an engine control unit;

the engine control unit, configured to receive the generator signal torque transmitted by the generator control unit, receive an engine target torque transmitted by a whole-vehicle control unit, and perform the method according to any one of claims 1 to 9;

the whole-vehicle control unit, configured to receive an engine signal torque transmitted by the engine control unit.

12. A storage medium, wherein a computer program is stored in the storage medium, and the computer program is configured to perform the method according to any one of claims 1 to 9 when executed.

13. An electronic apparatus comprising a memory and a processor, wherein a computer program is stored in the memory, and the processor is configured to run the computer program to perform the method according to any one of claims 1 to 9.

14. A computer program product comprising a computer program which, when executed by a processor, implements the method according to any one of claims 1 to 9.

FIG. 1

| |
| --- |
| Acquiring an engine target torque and a generator signal torque of a hybrid vehicle |

S202

| |
| --- |
| Calculating a torque deviation of the hybrid vehicle according to the engine target torque and the generator signal torque |

S204

| |
| --- |
| Performing self-learning calculation based on the torque deviation to obtain an engine demand torque of the hybrid vehicle, and calibrating an engine signal torque based on the engine demand torque to make the engine signal torque, the generator signal torque and the engine target torque of the hybrid vehicle consistent |

S206

FIG. 2

FIG. 3

FIG. 4

FIG. 5

FIG. 6

FIG. 7

Temperature
threshold D1

Temperature
threshold D2

Temperature threshold
hysteresis Dhy

Δ    R

Δ    R

Engine intake
air temperature

0

1

2

Intake air
temperature index

FIG. 8

FIG. 9

EP 4 733 730 A1

FIG. 10

FIG. 11

FIG. 12

Start

Self-learning writing flag is in a set state

No → Make the self-learning state equal to 0

Yes

$C \geqslant Tq4$

Yes → Self-learning value $<$ TqUp

Yes → Make the self-learning state equal to 1

No → Make the self-learning state equal to 0

No

$C \leqslant Tq5$

Yes → Self-learning value $>$ TqDw

Yes → Make the self-learning state equal to 2

No → Make the self-learning state equal to 0

No → Make the self-learning state equal to 0

End

FIG. 13

FIG. 14

FIG. 15

FIG. 16

FIG. 17

| S1 Torque deviation calculation |
|---|

↓

| S2 Self-learning writing |
|---|

↓

| S3 Self-learning reading |
|---|

↓

| S4 Engine demand torque calculation |
|---|

↓

| S5 Engine signal torque calculation |
|---|

FIG. 18

| Acquiring module 190 |
|---|
| Calculating module 192 |
| Calibrating module 194 |

Apparatus for calibrating
engine torque

FIG. 19

FIG. 20

## INTERNATIONAL SEARCH REPORT

| International application No. |
| --- |
| **PCT/CN2024/075622** |

| A. | CLASSIFICATION OF SUBJECT MATTER |
| --- | --- |

G01L25/00(2006.01)i;  B60W20/10(2016.01)i;  B60W10/06(2006.01)i

According to International Patent Classification (IPC) or to both national classification and IPC

| B. | FIELDS SEARCHED |
| --- | --- |

Minimum documentation searched (classification system followed by classification symbols)

    IPC:  G01L B60W

Documentation searched other than minimum documentation to the extent that such documents are included in the fields searched

Electronic data base consulted during the international search (name of data base and, where practicable, search terms used)

    WPABS; CNTXT; CNKI; VEN; USTXT; WOTXT; EPTXT; IEEE: 发电机, 发动机, 扭矩, 需求, 转矩, 目标, 车辆, generator, engine, torque, target, demand

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116754128 A (CHONGQING CHANG'AN AUTOMOBILE CO., LTD.) 15 September 2023 (2023-09-15)<br>description, paragraphs [0005]-[0152], and figures 1-20 | 1-14 |
| A | CN 115140011 A (CHINA FAW CO., LTD.) 04 October 2022 (2022-10-04)<br>description, paragraphs [0023]-[0054], and figures 1-7 | 1-14 |
| A | CN 113532731 A (HARBIN DONGAN AUTO ENGINE CO., LTD.) 22 October 2021 (2021-10-22)<br>entire document | 1-14 |
| A | CN 112362211 A (NINGBO INSTITUTE OF TECHNOLOGY, BEIHANG UNIVERSITY) 12 February 2021 (2021-02-12)<br>entire document | 1-14 |
| A | US 2017167287 A1 (GENERAL ELECTRIC COMPANY) 15 June 2017 (2017-06-15)<br>entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 April 2024** | **03 May 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/075622** |

| Patent document cited in search report | | | Publication date (day/month/year) | Patent family member(s) | Publication date (day/month/year) |
| --- | --- | --- | --- | --- | --- |
| CN | 116754128 | A | 15 September 2023 | None | |
| CN | 115140011 | A | 04 October 2022 | None | |
| CN | 113532731 | A | 22 October 2021 | None | |
| CN | 112362211 | A | 12 February 2021 | None | |
| US | 2017167287 | A1 | 15 June 2017 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310740002